# EUROPEAN PATENT SPECIFICATION

(11) **EP 2 026 182 B1**
(45) Date of publication and mention of the grant of the patent: **07.05.2014**
(21) Application number: 08013328.3
(22) Date of filing: 24.07.2008
(51) Int. Cl.: G06F 3/048

(54) **Method and apparatus for controlling display of windows**
Verfahren und Vorrichtung zur Steuerung von Fensteranzeigen
Procédé et appareil de contrôle de l'affichage de fenêtres

(30) Priority: 24.07.2007 JP 2007192408
(43) Date of publication of application: 18.02.2009
(73) Proprietor: NTT DoCoMo, Inc., Tokyo 100-6150 (JP)
(72) Inventor: Kano, Izua, Tokyo 100-6150 (JP); Yamada, Eiju, Tokyo 100-6150 (JP); Murakami, Keiichi, Tokyo 100-6150 (JP); Onda, Yasushi, Tokyo 100-6150 (JP); Yamada, Kazuhiro, Tokyo 100-6150 (JP); Kamiya, Dai, Tokyo 100-6150 (JP)
(74) Representative: HOFFMANN EITLE

(56) References cited:
- EP-A1- 0 820 002
- WO-A1-01/54113
- WO-A1-97/11431
- WO-A1-2004/063923
- WO-A2-2004/063917
- US-B1- 7 007 240

## Description

### BACKGROUND

### Technical Field

The present invention relates to a graphical user interface of a computer apparatus.

### Related Art

In computer apparatuses that execute an application program on an operating system, there is a computer apparatus that executes multiple application programs in parallel, and displays a window that serves as a user interface for each application, but when many programs are executed so that there are many windows displaying, the display screen becomes complicated. In this case, the user organizes the display screen by converting a window of an application that has a low priority of use to an icon.

However, because it is troublesome to the user to select a window to convert to an icon and perform an operation of converting that window to an icon, as technology that eliminates such trouble, for example, the system disclosed in Japanese patent application No. JP5 (1993)-250126A has been devised. The system disclosed in JP5-250126A detects the number of windows already being displayed when opening a new window. When the detected number of windows is at least a predetermined value, a priority ranking is assigned to each window, taking into consideration the time that the windows have been focused on, and a window with a low priority ranking is converted to an icon. In this system, a window is automatically converted to an icon when there are many windows, so the screen does not become complicated with windows.

EP 0 820 002 A1 discloses methods, data processing systems or program products which provide user interfaces including a window having a workspace and a first set of non-overlapping resizeable panes comprising a plurality of non-overlapping resizeable panes within the workspace.

### SUMMARY

In the system disclosed in JP5-250126A, the priority ranking is high for a window that has been focused on for a long time, but there may also be instances when the priority ranking of an application to the user does not depend on the time that a window has been focused on. For example, to a user that performs stock trading with a personal computer, the priority ranking is high for an application that obtains stock price information and updates the stock price information in order to obtain the most recent stock price information. However, if this application automatically obtains stock price information and updates the stock price information, the application updates the stock price information without being focused on and operated, so the time of focusing on that application is short. In this case, although the priority ranking of the application is high from the point of view of the user, according to the technology disclosed in JP5-250126A, the system will judge the priority ranking to be low because the time that the application is focused on is short. Thus, when the number of windows is at least a predetermined value, a window will be converted to an icon even though that window has a high priority to the user, which is inconvenient to the user.

The present invention was made against the background described above, and it is an object of the invention to provide technology in which when the number of windows is large, a window with low priority to the user is minimized.

In an aspect of the invention, there is provided an information processing apparatus according to any of claims 1-6.

In yet another aspect of the invention, there is provided a computer program for controlling display of windows of application program according to any of claims 7-9.

According to the invention, when the number of windows is large, a window with low priority to the user is minimized.

### BRIEF DESCRIPTION OF THE DRAWINGS

Exemplary embodiment(s) of the present invention will be described in detail based on the following figures, wherein:
FIG. 1 shows an external view of a mobile phone according to a first exemplary embodiment of the invention;
FIG 2 is a block diagram that shows the hardware configuration of the mobile phone in FIG 1;
FIGS. 3A and 3B show the format of a change history table TB 1 stored by the mobile phone in FIG. 1;
FIG 4 shows the configuration of a Java runtime environment that is realized in a mobile phone;
FIG 5 is a flowchart that shows the flow of processing performed by a CPU 102;
FIG. 6 is a flowchart that shows the flow of processing performed by the CPU 102;
FIG. 7 shows an arrangement of windows in a virtual display region;
FIG. 8 shows an arrangement of windows in a virtual display region;
FIG 9 shows an arrangement of windows in a virtual display region;
FIG. 10 shows an arrangement of windows in a display 107;
FIG. 11 shows an arrangement of windows in a virtual display region; and
FIG. 12 shows an arrangement of windows in a virtual display
region.

### DETAILED DESCRIPTION

### Configuration of Exemplary Embodiment

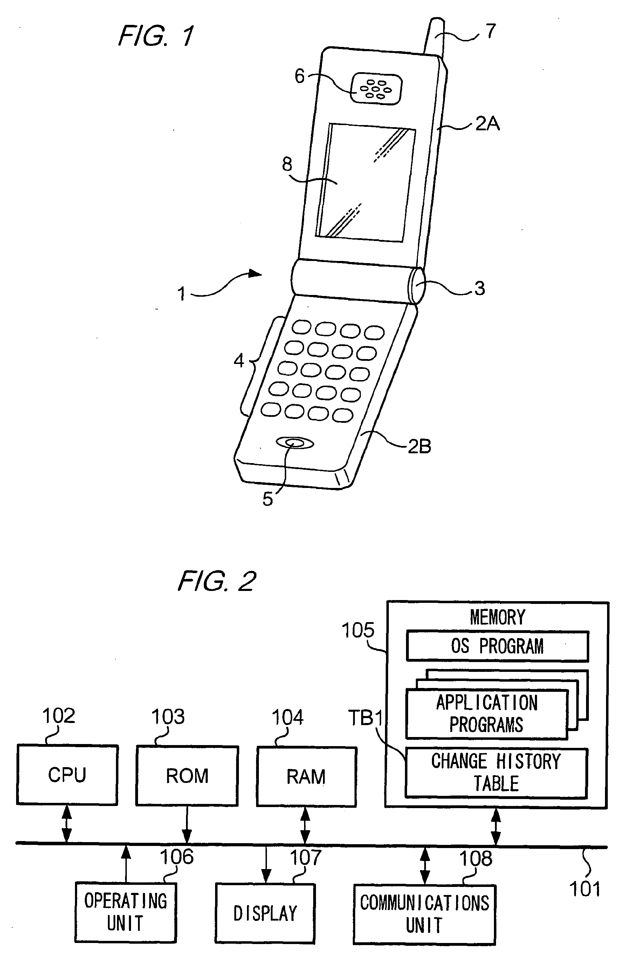

FIG. 1 shows an external view of a folding mobile phone 1 that is an example of an information processing apparatus according to an exemplary embodiment of the invention. As shown in FIG. 1, this mobile phone 1 has a first case body 2A and a second case body 2B. The first case body 2A and the second case body 2B are linked via a hinge 3 near their respective end edges. A user of this mobile phone 1 uses the mobile phone 1 with both case bodies in an open state as shown in FIG 1, to perform voice communications or data communications.

An operating key group 4 of multiple operating keys that are operated by the user, and a microphone 5 for inputting the user's voice, are disposed in the second case body 2B. A CPU (Central Processing Unit) that controls operation of the mobile phone 1, a RAM (Random Access Memory) used as a working area of the CPU, and various electronic components (not shown) such as a nonvolatile memory that stores various programs executed by the CPU, are contained within the second case 2B. On the other hand, a speaker 6 that outputs voice during a voice phone call, an antenna 7 for performing wireless communications between the mobile phone 1 and a wireless base station, a display apparatus 8 that displays text and images, and the like are disposed in the first case body 2A.

FIG. 2 is a block diagram that shows the hardware configuration of the mobile phone 1. As shown in FIG. 2, the elements of the mobile phone 1 are connected via a bus 101. A communications unit 108 is provided with the antenna 7, and performs voice communications or data communications with a wireless base station that relays communications performed by the mobile phone 1. An operating unit 106 has the operating key group 4, which is provided with, for example, a numeric keypad for performing input of numbers or text, various keys that instruct to make a call, clear, or end a call, keys for performing menu operations, and power keys for turning power on/off. A user of the mobile phone 1 operates the keys provided in the operating unit 106 to input various instructions to the mobile phone 1. A display 107 is provided with the display apparatus 8, and displays, for example, text, images, and menu screens for operating the mobile phone 1.

An IPL (Initial Program Loader), an OS program that realizes the function of an operating system (below, referred to as an OS), and a Java platform program that realizes a Java (registered trademark) runtime environment are stored in a ROM (Read Only Memory) 103. A memory 105 has a nonvolatile memory (not shown), and stores various programs such as an application program that realizes a music playback function (program name: "music"), and application programs that realize a game function (program names: "game_1", "game_2"). These application programs are composed of a JAR (Java Archive) file that includes a program (byte code) created using the Java programming language, and an ADF (Application Descriptor File) that describes data related to the JAR file.

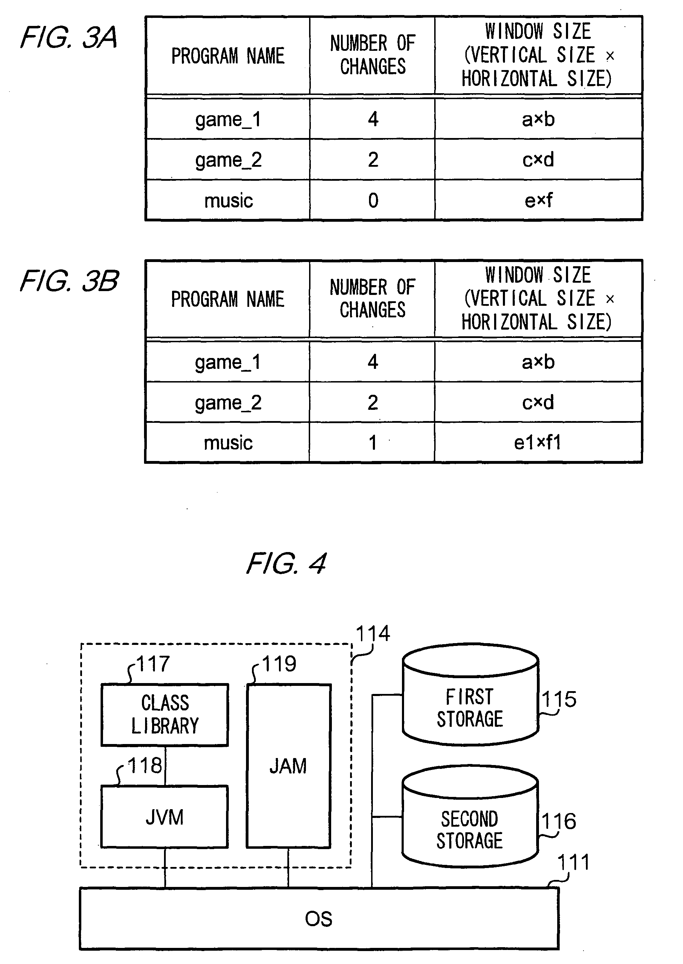

A change history table TB 1 is stored in the memory 105. FIG 3A shows an example of the format of the change history table TB1. The change history table TB1 has a "program name" field, a "number of changes" field, and a "window size" field, and the program name of application programs that have been executed by a CPU 102 are stored in the "program name" field. Stored in each cell of the "number of changes" field is the number of changes in the size of the window displayed in the display 107 while the program with the program name stored in the same record was being executed. Stored in each cell of the "window size" field is the size of the window (window vertical size × window horizontal size) displayed in the display 107 while the program with the program name stored in the same record was being executed.

In the mobile phone 1, when power is supplied from a power source (not shown), the IPL stored in the ROM 103 is executed by the CPU 102. When the CPU 102 executes the IPL, the OS program stored in the ROM 103 is executed by the CPU 102, thus realizing basic functions as a mobile phone, such as input/output functions like input from the operating unit 106 and screen output to the display 107, access to the memory 105, execution of various programs stored in the memory 105, a voice communications function, and a data communications function.

When the OS program is executed, a GUI function and a multi-tasking function that executes multiple programs in parallel are executed in the mobile phone 1. When the mobile phone 1 executes an application program in response to an instruction from the user, a window that serves as an interface between the user and the application program is displayed in the display 107, for each executed program. By operating the operating unit 106, the user can switch the window to which input from the user is transferred, and in a state in which focus is on a window, by operating the operating unit 106, the user can change the display position or the display size of the window.

The CPU 102 executes the Java platform program after executing the OS program. Thus, a Java runtime environment 114 shown by way of example in FIG. 4 is realized on the OS, and a first storage 115 and a second storage 116 are secured in the nonvolatile memory of the memory 105. The Java runtime environment 114 is composed of a class library 117, a JVM (Java Virtual Machine) 118, and a JAM (Java Application Manager) 119. The class library 117 combines a group of program modules (classes) that have particular functions in one file. The JVM 118 has a function to interpret and execute byte code provided as a Java application program. The JAM 119 has a function to download and install, and manage startup, termination, and the like of Java application programs.

The first storage 115 is a region where a Java application program (a Jar file and an ADF) downloaded under management of the JAM 119 is stored. The second storage 116 is a region for storing data generated when executing Java application programs, after execution is terminated, and in the second storage 116, an individual storage region is allocated to each Java application program that has been installed. The data of a storage region allocated to a particular Java application program can be rewritten only while that Java application program is being executed, and cannot be rewritten by another Java application program.

When, in a state in which this Java runtime environment 114 is being executed, the user operates the operating unit 106 to instruct execution of a Java application program, the Java application program stored in the first storage is interpreted and executed by the JVM 118, and a window that corresponds to the program is displayed in the display 107.

### Operation of Exemplary Embodiment

### Operation When Application Program Is First Executed

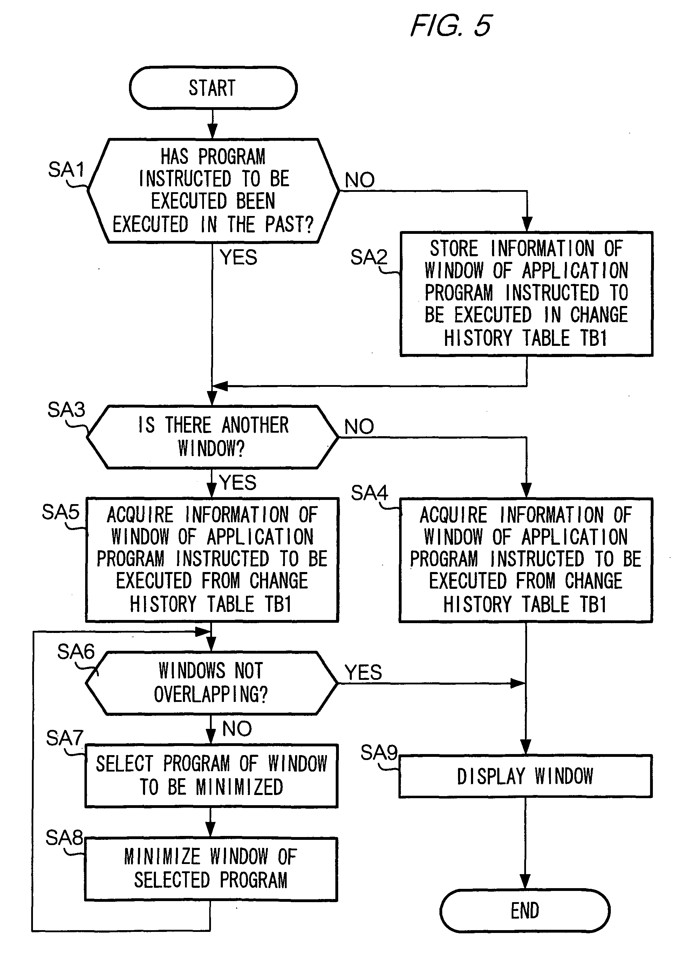

When the user operates keys of the operating unit 106 to instruct the mobile phone 1 to execute an application program, the CPU 102 executes the application program for which execution was instructed. When the CPU 102 executes the application program, a window that serves as an interface between the user and the application program is displayed in the display 107, and here the processing shown in FIG. 5 is performed.

First, the CPU 102 judges whether or not the application program instructed to be executed has been executed in the past (Step SA1). Specifically, the CPU 102 searches in the change history table TB 1 for the program name of the application program instructed to be executed. When this program name is not stored in the "program name" field, the CPU 102 judges that the application program instructed to be executed has not been executed in the past (Step SA1; NO), and stores the program name of the application program instructed to be executed and information of the window displayed by execution of the program in the change history table TB 1 (Step SA2).

For example, when the program name instructed to be executed is "music", the CPU 102 stores this program name "music" in the "program name" field of the change history table TB 1 as shown in FIG. 3A, and "0" is stored as the number of changes in the cell of the "number of changes" field of the record in which "music" has been stored. A predetermined window size ("e×f") is stored in the cell of the "window size" field of the record in which the program name "music" has been stored.

Next, the CPU 102 judges whether or not a window of another program (a window of another application program currently being executed) is being displayed in the display 107 (Step SA3). In a case where no windows are being displayed (a case where another application program is not being executed at the time when execution of an application program was instructed), the judgment of the CPU 102 is NO in Step SA3. Then, the window size of the application program instructed to be executed is acquired from the change history table TB1 (Step SA4). The CPU 102 acquires the window size "e×f" stored in the record where the program name "music" is stored, from the change history table TB 1. The window size of the program with the program name "music" is set to the acquired window size (e×f), and the window is displayed in the display 107.

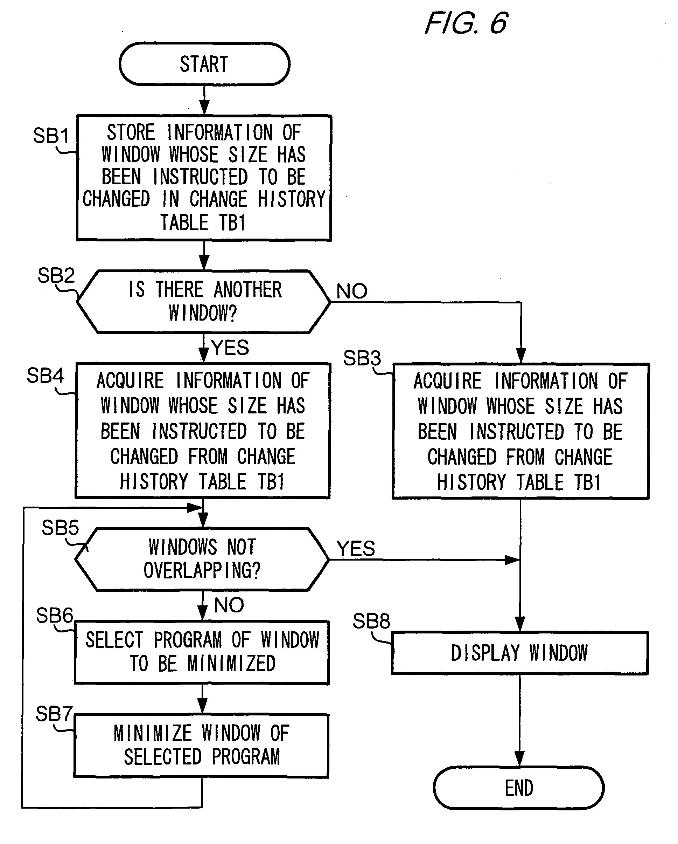

Next, when the user operates the operating unit 106 to instruct the mobile phone 1 to change the size of the window of the program with the program name "music", the CPU 102 performs the processing shown in FIG 6 to change the size of the window. First, the CPU 102 stores information of the window whose size was instructed to be changed in the change history table TB 1 (Step SB1). Specifically, the CPU 102 adds 1 to the number of changes in the record where the program name of the window whose size was instructed to be changed is stored. Because a change in the size of the window of the program with the program name "music" has been instructed, the CPU 102 adds 1 to the number of changes "0" stored in the record of the program name "music" in the change history table TB 1. The CPU 102 stores the window size after the size change in the change history table TB1. When the size of the window of the program with the program name "music" has been changed from "e×f" to "e1×f1", the window size "e1×f1" after the change is stored in the "window size" cell of the record for the program name "music". As a result, the change history table TB1 becomes as shown in FIG. 3B.

Next, the CPU 102 judges whether or not a window other than the window whose size was instructed to be changed is being displayed in the display 107 (Step SB2). When no windows other than the window whose size was instructed to be changed are being displayed in the display 107, the judgment of the CPU 102 is NO in Step SB2. The window size of the program with the program name "music" that was instructed to be changed is acquired from the change history table TB 1 (Step SB3), the window size is set to the acquired window size (e1×f1), and the window is displayed in the display 107 (Step SB8).

### Operation When Realizing Multiple Applications

Next is a description of operation when multiple application programs have been executed. In the below description of operation, it is assumed that from a state in which the change history table TB 1 shown in FIG. 3B is stored in the memory 105 and no application programs are being executed, application programs have been successively executed.

First, when the user operates keys of the operating unit 106 to instruct the mobile phone 1 to execute an application program with the program name "game_1", the CPU 102 executes the processing shown in FIG. 5. First, the CPU 102 judges whether or not the application program instructed to be executed has been executed in the past, so the CPU 102 searches for the program name "game_1" in the change history table TB 1. The program name "game_1" is stored in the change history table TB1 shown in FIG. 3B, so the CPU 102 finds the program name "game_1", and judges YES in Step SA1.

Next, the CPU 102 judges whether or not a window of another program is being displayed in the display 107 (Step SA3). When no windows are being displayed (Step SA3; NO), the CPU 102 acquires the window size of the application program that was instructed to be executed from the change history table TB 1 (Step SA4).

The CPU 102 acquires the window size "a×b" stored in the record where the program name "game_1" is stored, from the change history table TB1. Then, the window size of the program with the program name "music" is set to the acquired window size (a×b), and the window is displayed in the display 107 (Step SA9).

Next, when the user operates keys of the operating unit 106 to instruct the mobile phone 1 to execute an application program with the program name "game_2", the CPU 102 searches in the change history table TB 1 for the program name "game_2" of the application program instructed to be executed. The program name "game_2" is stored in the change history table TB1 shown in FIG 3B, so the judgment is YES in Step SA1.

Next, the CPU 102 judges whether or not a window of another program is being displayed in the display 107 (Step SA3). The application program with the program name "game_1" has already been executed and one window is being displayed, so the judgment of the CPU 102 is YES in Step SA3. When the CPU 102 judges YES in Step SA3, the CPU 102 reads the window size "c×d" stored in the record where the program name "game_2" is stored, from the change history table TB 1 (Step SA5).

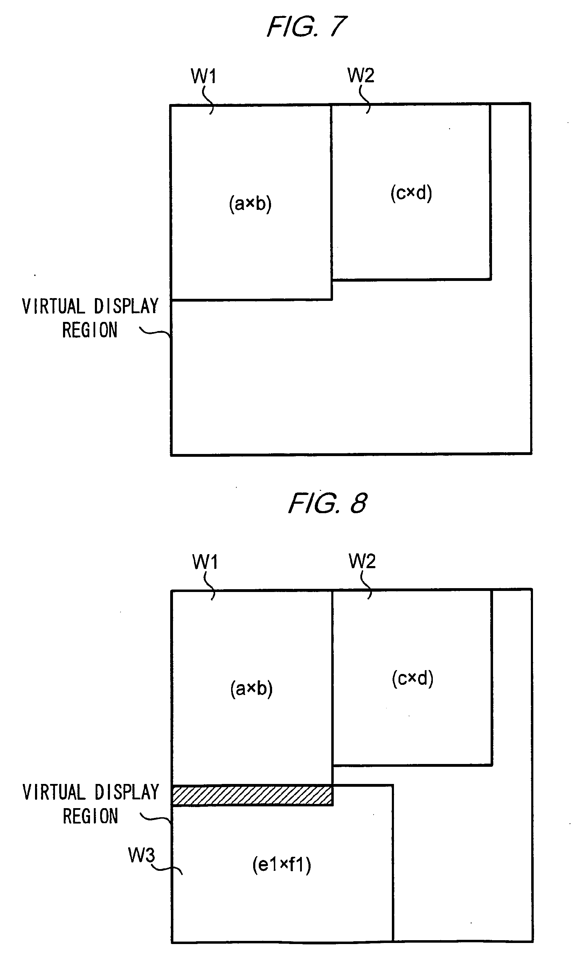

Then, the CPU 102 judges whether or not the window that is already displayed and the window of the program that was instructed to be executed will be displayed in the display 107 without overlapping (Step SA6). Specifically, the CPU 102 generates a virtual display region with the same size as the display region of the display 107, and arranges the window of each program in this virtual display region. First, the CPU 102 arranges a window W1 of the program with the program name "game_1" in the virtual display region as shown in FIG 7. Next, the CPU 102 arranges a window W2 of the program with the program name "game_2" that was instructed to be executed. As shown in FIG. 7, in the virtual display region, in a case where it is possible to arrange the window for each program such that the windows do not overlap (Step SA6; YES), the CPU 102, using the same arrangement as the virtual display region, displays the window for the program with the program name "game_1" and the window for the program with the program name "game_2" in the display 107 (Step SA9).

Next, when the user operates keys of the operating unit 106 to instruct the mobile phone 1 to execute the application program with the program name "music", the CPU 102 searches in the change history table TB 1 for the program name "music" of the application program instructed to be executed. The program name "music" is stored in the change history table TB1 shown in FIG. 3B, so the judgment is YES in Step SA1.

Next, the CPU 102 judges whether or not a window of another program is being displayed in the display 107 (Step SA3). The application program with the program name "game_1" and the application program with the program name "game_2" have already been executed and two windows are being displayed, so the judgment of the CPU 102 is YES in Step SA3. When the CPU 102 judges YES in Step SA3, the CPU 102 reads the window size "e1×f1" stored in the record where the program name "music" is stored, from the change history table TB 1 (Step SA5).

Then, the CPU 102 judges whether or not the windows that are already displayed and the window of the program that was instructed to be executed will be displayed in the display 107 without overlapping (Step SA6). The CPU 102 generates a virtual display region with the same size as the display region of the display 107, and arranges each window in this virtual display region. First, as shown in FIG. 8, the CPU 102 arranges the window W1 of the program with the program name "game_1" in the virtual display region, and then arranges the window W2 of the program with the program name "game_2" in the virtual display region. Next, the CPU 102 tries arranging a window W3 of the program with the program name "music" that was instructed to be executed. As shown in FIG. 8, in a case where it is not possible to arrange the window for each program such that the windows do not overlap (a case where an overlapping portion (the portion where hatching is drawn in FIG. 8) of windows occurs in the virtual display region)(Step SA6; NO), the CPU 102 selects the program of a window to be minimized (Step SA7).

Specifically, the CPU 102 reads, from the change history table TB 1, the number of changes of the windows previously displayed that is stored in the record for the program name "game_1" and the record for the program name "game_2", and selects the program with the most window size changes among the programs being executed as the program whose window will be minimized. For example, in the case of the change history table TB 1 shown in FIG 3B, the number of size changes of the window for the "game_1" program is "4", and the number of size changes of the window for the "game_2" program is "3", so there are more size changes of the window for the "game_1" program, and thus the program with the program name "game_1" is selected as the program whose window will be minimized.

When the CPU 102 selects the program whose window will be minimized, the CPU 102 minimizes the window of this program, and stores the window size when minimized (a1×b1) in the cell for window size in the record for the program name "game_1" (Step SA8). Then the CPU 102 returns the flow of processing to Step SA6.

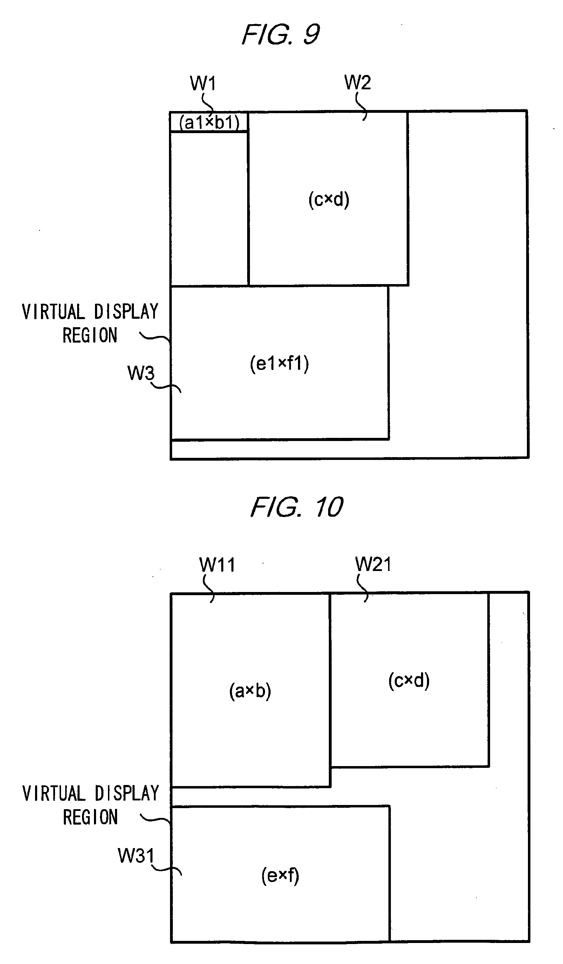

When the CPU 102 returns the flow of processing to Step SA6, the CPU 102 again judges whether or not the window of each program will be displayed in the display 107 without overlapping (Step SA6). First, the CPU 102 arranges a window W4 of the program with the program name "game_1" that has been minimized with the processing described above in a virtual display region, and then arranges the window W2 of the program with the program name "game_2" in the virtual display region. Then, the CPU 102 tries arranging the window W3 of the program with the program name "music" that was instructed to be executed. As shown in FIG. 9, in the virtual display region, in a case where it is possible to arrange the window for each program such that the windows do not overlap (Step SA6; YES), the CPU 102, using the same arrangement as the virtual display region, displays the window for each program in the display 107 (Step SA9).

In a case where it is judged NO in Step SA6 after returning the processing to Step SA6 again, the CPU 102 selects the program whose window will be minimized, and at this time only the number of size changes of the windows of programs whose window has not been minimized is read from the change history table TB 1. The program with the largest number of window size changes from among the programs whose window has not been minimized is selected as the program whose window will be minimized.

Thus, with the present exemplary embodiment, in a case in which when newly displaying a window, the window cannot be arranged without overlapping, a window with the most size changes is minimized first. It is thought that a window with a small number of size changes has an appropriate size and so its size will not be changed, and thus when managing the window there is a desire to maintain the size of that window; with this exemplary embodiment such desires can be met.

### Operation When Size of a Window Was Changed While Multiple Windows Were Being Displayed

Next is a description of operation when, from a state in which multiple windows are being displayed, the size of a window has been changed. The following is a description of operation when the size of a window is changed, from a state in which a window W11 of the program with program name "game_1", a window W21 of the program with program name "game_2", and a window W31 of the program with program name "music" are displayed in the display 107 as shown in FIG 10, and the change history table TB 1 shown in FIG. 3A is stored in the memory 105.

First, when the user operates the keys of the operating unit 106 to instruct the mobile phone 1 to change the size of the window 31 of the program with the program name "music", the CPU 102 changes the size of the window W31. Then the CPU 102 stores information of the window whose size has been changed in the change history table TB1 (Step SB1). Specifically, the CPU 102 adds 1 to the number of changes in the record where the program name of the window whose size was instructed to be changed is stored. Because a change in the size of the window W31 of the program with the program name "music" has been instructed, the CPU 102 adds 1 to the number of changes "0" stored in the record of the program name "music" in the change history table TB 1. The CPU 102 stores the window size after the size change in the change history table TB 1. When the size of the window W31 of the program with the program name "music" has been changed from "e×f" to "e1×f1", the window size "e1×f1" after the change is stored in the "window size" cell of the record for the program name "music". As a result, the change history table TB1 becomes as shown in FIG 3B.

Next, the CPU 102 judges whether or not a window other than the window whose size was instructed to be changed is being displayed in the display 107 (Step SB2). Because windows other than the window whose size was instructed to be changed are being displayed in the display 107, the judgment of the CPU 102 is YES in Step SB2. The window size (e1×f1) of the program with the program name "music" that was instructed to be changed is acquired from the change history table TB 1 (Step SB4).

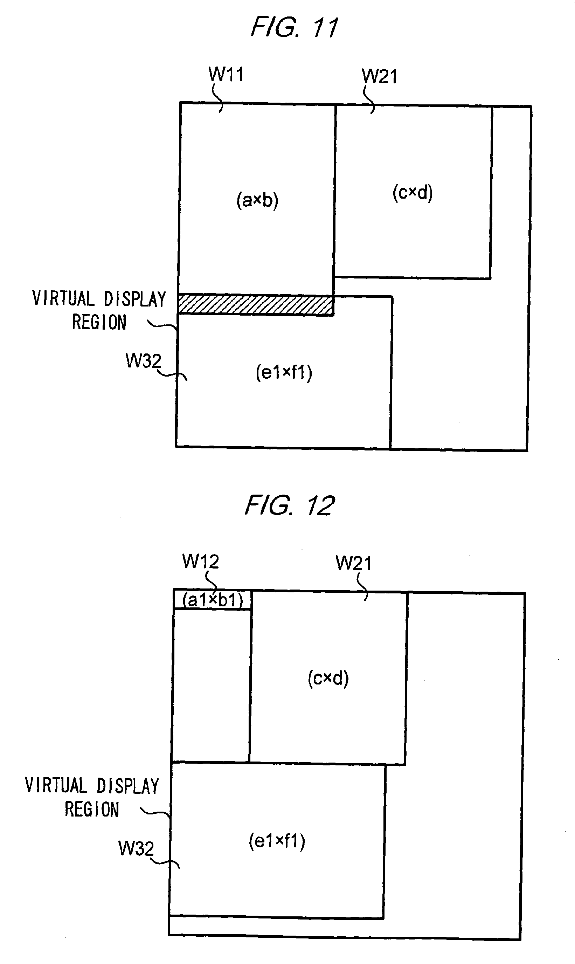

Then, the CPU 102 judges whether or not the window W32 after the size change and the other windows will be displayed in the display 107 without overlapping (Step SB5). Specifically, the CPU 102 generates a virtual display region with the same size as the display region of the display 107, and arranges each window in this virtual display region. First, the CPU 102 arranges the window W11 of the program with the program name "game_1" whose size was not changed in the virtual display region, and then arranges the window W21 of the program with the program name "game_2" whose size was not changed in the virtual display region. Next the CPU 102 tries arranging the window W32 of the program with the program name "music" in the virtual display region. As shown in FIG. 11, in a case where the window W32 of the program with the program name "music" whose size was changed was arranged, when it was not possible to arrange such that the windows of each program do not overlap (a case where an overlapping portion (the portion where hatching is drawn in FIG 11) of windows occurs in the virtual display region)(Step SB5; NO), the CPU 102 selects the program of a window to be minimized (Step SB6).

Specifically, the CPU 102 reads, from the change history table TB 1, the number of changes stored in the record for the program name "game_1" and the record for the program name "game_2", whose size has not been changed, and selects the program with the most window size changes among the programs being executed as the program whose window will be minimized. For example, in the case of the change history table TB1 shown in FIG 3B, the number of size changes of the window for the "game_1" program is "4", and the number of size changes of the window for the "game_2" program is "3", so there are more size changes of the window for the "game_1" program, and thus the program with the program name "game_1" is selected as the program whose window will be minimized.

When the CPU 102 selects the program whose window will be minimized, the CPU 102 minimizes the window of this program, and stores the window size when minimized (a1×b1) in the cell for window size in the record for the program name "game_1" (Step SB7). Then the CPU 102 returns the flow of processing to Step SB5.

When the CPU 102 returns the flow of processing to Step SB5, the CPU 102 again judges whether or not the window of each program will be displayed in the display 107 without overlapping (Step SB5). First, as shown in FIG 12, the CPU 102 arranges the window W12 of the program with the program name "game_1" whose window was minimized in the above processing in the virtual display region, and then arranges the window W21 of the program with the program name "game_2" in the virtual display region. Next the CPU 102 tries arranging the window W32 of the program with the program name "music". As shown in FIG. 12, in the virtual display region, in a case where it is possible to arrange the window for each program such that the windows do not overlap (Step SB5; YES), the CPU 102, using the same arrangement as the virtual display region, displays the window for each program in the display 107 (Step SB8).

In a case where it is judged NO in Step SB5 after returning the processing to Step SB5 again, the CPU 102 selects the program whose window will be minimized, and at this time only the number of size changes of the windows of programs whose window has not been minimized is read from the change history table TB 1. The program with the largest number of window size changes from among the programs whose window has not been minimized is selected as the program whose window will be minimized.

Thus, as described above, with the present exemplary embodiment, in a case in which when the size of a window has been changed in a state in which multiple windows are being displayed, the windows cannot be arranged without overlapping, the window with the most size changes is minimized first. It is thought that a window with a small number of size changes has an appropriate size and so its size will not be changed, and thus when managing the window there is a desire to maintain the size of that window; with this exemplary embodiment such desires can be met.

### Modified Examples

An exemplary embodiment of the invention was described above, but the invention is not limited by the exemplary embodiment described above; various other exemplary embodiments are also possible. For example, in an exemplary embodiment of the invention, the above exemplary embodiment may be modified as follows.

The information processing apparatus that performs the above operations is not limited to being a mobile phone, and may also be another computer apparatus such as a personal computer device or a PDA (Personal Digital Assistant), provided that the information processing apparatus executes multiple programs in parallel, and displays a window that serves as an interface with the user for each program.

In the above exemplary embodiment, it is possible to adopt a configuration in which after the processing in Step SA8 ends, the flow of processing does not return to Step SA6, and the flow of processing to Step SA9 is changed. Also, in the above exemplary embodiment, it is possible to adopt a configuration in which after the processing in Step SB7 ends, the flow of processing does not return to Step SB5, and the flow of processing to Step SB8 is changed.

In the above exemplary embodiment, a window with more size changes is minimized, however a configuration may also be adopted in which the window is not minimized to a smallest predetermined size, but rather the window is displayed converted to an icon (a picture that expresses the function of the program).

The application programs subject to window size control are not limited to Java application programs. In the exemplary embodiment described above, the CPU performs all of the processing to read the number of changes in window size, compare the numbers of changes in window size, determine the window that should be minimized, and the like, but this is not a limitation; for example, a configuration may be adopted in which an independent processor or function module is caused to execute the respective processing. That is, provided that the functions of the invention described above can be realized, the form of that implementation is not limited to the hardware configuration and software configuration in the exemplary embodiment described above.

## Claims

1. An information processing apparatus comprising:
a first memory (105) that is adapted to store at least one application program;
an operating unit (106) suitable for being operated by a user;
a changing unit that is adapted to change the size of a window of an application program according to an instruction input from the operating unit, the window being displayed on a display screen (107); and
an execution unit (102) that is adapted to execute application programs stored in the first memory in response to an instruction input from the operating unit;
**characterized in that** the information processing apparatus further comprises:
a second memory (105) that is adapted to store the number of times the changing unit performs changes in a size of a window; and
a display controller that is adapted to cause a window of an application program executed by the execution unit to be displayed on the display screen, wherein, in a case where two or more windows are being displayed on the display screen, and the two or more windows being displayed cannot be displayed within a display region of the display screen without overlapping, the display controller being adapted to read, from the second memory, the number of times changes are performed in the size of windows being displayed, and being adapted to minimize a window whose number of size changes is the largest, and being adapted to display the minimized window on the display screen.

2. The information processing apparatus according to claim 1, wherein, in a case where two or more windows are being displayed on the display screen when the execution unit initiates execution of an application program, and the two or more windows being displayed and the window of the application program to be executed cannot be displayed within a display region of the display screen without overlapping, the display controller is adapted to read, from the second memory, the number of times changes are performed in the size of windows being displayed, and is adapted to minimize a window whose number of size changes is the largest, and is adapted to display the minimized window on the display screen.

3. The information processing apparatus according to claim 2, wherein when a plurality of windows cannot be displayed without overlapping within the display region after the window with the largest number of size changes is minimized, the display controller is adapted to repeatedly minimize the window whose number of size changes is the largest, wherein each time a window is minimized, the display controller is adapted to determine whether it is possible to display windows that have been minimized, windows that have not been minimized, and a window of an application program to be executed by the execution unit within the display region without overlapping, and when determined the display is possible, the display controller is adapted to display the windows that have been minimized, the windows that have not been minimized, and the window of the application program to be executed by the execution unit on the display screen.

4. An information processing apparatus according to claim 1, wherein, in a case where two or more windows are being displayed on the display screen when the changing unit changes the size of a window displayed on the display screen, and the two or more windows being displayed and the window whose size has been changed cannot be displayed within a display region of the display screen without overlapping, the display controller is adapted to read, from the second memory, the number of size changes of windows whose size has not been changed, the windows being displayed in the display, and is adapted to minimize a window whose number of size changes is the largest, and is adapted to display the minimized window on the display screen.

5. The information processing apparatus according to claim 4, wherein when a plurality of windows cannot be displayed without overlapping within the display region after the window with the largest number of size changes is minimized, the display controller is adapted to repeatedly minimize the window whose number of size changes is largest, wherein each time a window is minimized, the display controller is adapted to determine whether it is possible to display windows that have been minimized, windows that have not been minimized, and a window whose size has been changed within the display region without overlapping, and when determined the display is possible, the display controller is adapted to display the windows that have been minimized, the windows that have not been minimized, and the window whose size has been changed by the changing unit on the display screen.

6. The information processing apparatus according to claim 2 or 4, wherein the display controller is adapted to display each window such that a plurality of windows displayed on the display screen do not overlap.

7. A computer program product for controlling display of windows of application programs, the program causing a computer to execute:
changing a size of a window of an application program according to an instruction input from an operating unit, the window being displayed on a display screen;
**characterized by** causing the computer to execute:
storing the number of times the changing unit performs changes in a size of a window in a memory;
executing an application program in response to an instruction input from the operating unit; and
in a case where two or more windows are being displayed on the display screen, and the two or more windows being displayed cannot be displayed within a display region of the display screen without overlapping, reading, from the memory, the number of times changes are performed in the size of windows being displayed, and minimizing a window whose number of size changes is the largest, and displaying the minimized window on the display screen.

8. A computer program product for controlling display of windows of application programs according to claim 7, wherein in a case where two or more windows are being displayed on the display screen when execution of an application program is initiated, and the two or more windows being displayed and the window of the application program to be executed cannot be displayed within a display region of the display screen without overlapping, reading, from the memory, the number of times changes are performed in the size of windows being displayed, and minimizing a window whose number of size changes is the largest, and displaying the minimized window on the display screen.

9. A computer program product for controlling display of windows of application programs according to claim 7, wherein in a case where two or more windows are being displayed on the display screen when a window displayed on the display screen is changed in size, and the two or more windows being displayed and the window whose size has been changed cannot be displayed within a display region of the display screen without overlapping, reading, from the memory, the number of times changes are performed in the size of windows whose size are not being changed, the windows being displayed on the display screen, and minimizing a window whose number of size changes is the largest, and displaying the minimized window on the display screen.

## Patentansprüche

1. Informationsverarbeitungsvorrichtung, umfassend:
einen ersten Speicher (105), welcher dafür geeignet ist, mindestens ein Anwendungsprogramm zu speichern;
eine Bedienungseinheit (106), welche dafür geeignet ist, von einem Benutzer bedient zu werden;
eine Veränderungseinheit, welche dafür geeignet ist, die Größe eines Fensters eines Anwendungsprogramms gemäß einem Befehl, der aus der Bedienungseinheit eingegeben wird, zu verändern, wobei das Fenster auf einem Bildschirm (107) angezeigt wird; und
eine Ausführungseinheit (102), welche dafür geeignet ist, in Reaktion auf einen Befehl, der aus der Bedienungseinheit eingegeben wird, Anwendungsprogramme auszuführen, die in dem ersten Speicher gespeichert sind;
**dadurch gekennzeichnet, dass** die
Informationsverarbeitungsvorrichtung ferner das Folgende umfasst:
einen zweiten Speicher (105), welcher dafür geeignet ist, die Anzahl der Male zu speichern, wie oft die Veränderungseinheit Veränderungen einer Größe eines Fensters vornimmt; und
eine Anzeigesteuerung, welche dafür geeignet ist zu bewirken, dass ein Fenster eines Anwendungsprogramms, das von der Anwendungseinheit ausgeführt wird, auf dem Bildschirm angezeigt wird, wobei in einem Fall, dass auf dem Bildschirm zwei oder mehr Fenster angezeigt werden und die zwei oder mehr Fenster, die angezeigt werden, nicht ohne Überlappen innerhalb eines Anzeigebereichs des Bildschirms angezeigt werden können, die Anzeigesteuerung dafür geeignet ist, aus dem zweiten Speicher die Anzahl der Male auszulesen, wie oft Veränderungen der Größe von Fenstern vorgenommen wurden, die angezeigt werden, und dafür geeignet ist, ein Fenster zu minimieren, dessen Anzahl der Größenveränderungen die höchste ist, und dafür geeignet ist, das minimierte Fenster auf dem Bildschirm anzuzeigen.

2. Informationsverarbeitungsvorrichtung nach Anspruch 1, wobei in einem Fall, dass auf dem Bildschirm zwei oder mehr Fenster angezeigt werden, wenn die Ausführungseinheit die Ausführung eines Anwendungsprogramms beginnt und die zwei oder mehr Fenster, die angezeigt werden, und das Fenster des auszuführenden Anwendungsprogramms nicht ohne Überlappen innerhalb eines Anzeigebereichs des Bildschirms angezeigt werden können, die Anzeigesteuerung dafür geeignet ist, aus dem zweiten Speicher die Anzahl der Male auszulesen, wie oft Veränderungen der Größe von Fenstern vorgenommen wurden, die angezeigt werden, und dafür geeignet ist, ein Fenster zu minimieren, dessen Anzahl der Größenveränderungen die höchste ist, und dafür geeignet ist, das minimierte Fenster auf dem Bildschirm anzuzeigen.

3. Informationsverarbeitungsvorrichtung nach Anspruch 2, wobei, wenn mehrere Fenster nicht ohne Überlappen innerhalb des Anzeigebereichs angezeigt werden können, nachdem das Fenster mit der höchsten Anzahl an Größenveränderungen minimiert ist, die Anzeigesteuerung dafür geeignet ist, wiederholt das Fenster zu minimieren, dessen Anzahl der Größenveränderungen die höchste ist, wobei jedes Mal, wenn ein Fenster minimiert wird, die Anzeigesteuerung dafür geeignet ist zu bestimmen, ob es möglich ist, Fenster, die minimiert worden sind, Fenster, die nicht minimiert worden sind, und ein Fenster eines Anwendungsprogramms, das von der Ausführungseinheit auszuführen ist, ohne Überlappen innerhalb des Anzeigebereichs anzuzeigen, und wenn sie bestimmt hat, dass die Anzeige möglich ist, die Anzeigesteuerung dafür geeignet ist, die Fenster, die minimiert worden sind, die Fenster, die nicht minimiert worden sind, und das Fenster eines Anwendungsprogramms, das von der Ausführungseinheit auszuführen ist, auf dem Bildschirm anzuzeigen.

4. Informationsverarbeitungsvorrichtung nach Anspruch 1, wobei in einem Fall, dass auf dem Bildschirm zwei oder mehr Fenster angezeigt werden, wenn die Veränderungseinheit die Größe eines Fensters verändert, das auf dem Bildschirm angezeigt wird, und die zwei oder mehr Fenster, die angezeigt werden, und das Fenster, dessen Größe verändert worden ist, nicht ohne Überlappen innerhalb eines Anzeigebereichs des Bildschirms angezeigt werden können, die Anzeigesteuerung dafür geeignet ist, aus dem zweiten Speicher die Anzahl der Größenveränderungen von Fenstern auszulesen, deren Größe nicht verändert worden ist, wobei die Fenster auf der Anzeigevorrichtung angezeigt werden, und dafür geeignet ist, ein Fenster zu minimieren, dessen Anzahl der Größenveränderungen die höchste ist, und dafür geeignet ist, das minimierte Fenster auf dem Bildschirm anzuzeigen.

5. Informationsverarbeitungsvorrichtung nach Anspruch 4, wobei, wenn mehrere Fenster nicht ohne Überlappen innerhalb des Anzeigebereichs angezeigt werden können, nachdem das Fenster mit der höchsten Anzahl der Größenveränderungen minimiert ist, die Anzeigesteuerung dafür geeignet ist, wiederholt das Fenster zu minimieren, dessen Anzahl der Größenveränderungen die höchste ist, wobei jedes Mal, wenn ein Fenster minimiert wird, die Anzeigesteuerung dafür geeignet ist zu bestimmen, ob es möglich ist, Fenster, die minimiert worden sind, Fenster, die nicht minimiert worden sind, und ein Fenster, dessen Größe verändert worden ist, ohne Überlappen innerhalb des Anzeigebereichs anzuzeigen, und wenn sie bestimmt hat, dass die Anzeige möglich ist, die Anzeigesteuerung dafür geeignet ist, die Fenster, die minimiert worden sind, die Fenster, die nicht minimiert worden sind, und das Fenster, dessen Größe verändert worden ist, auf dem Bildschirm anzuzeigen.

6. Informationsverarbeitungsvorrichtung nach Anspruch 2 oder 4, wobei die Anzeigesteuerung dafür geeignet ist, jedes Fenster derart anzuzeigen, dass sich mehrere Fenster, die auf dem Bildschirm angezeigt werden, nicht überlappen.

7. Computerprogrammprodukt zum Steuern der Anzeige von Fenstern von Anwendungsprogrammen, wobei das Programm bewirkt, dass ein Computer das Folgende ausführt:
Verändern einer Größe eines Fensters eines Anwendungsprogramms gemäß einem Befehl, der aus einer Bedienungseinheit eingegeben wird, wobei das Fenster auf einem Bildschirm angezeigt wird;
**dadurch gekennzeichnet, dass** bewirkt wird, das der Computer das Folgende ausführt:
Speichern der Anzahl der Male, wie oft die Veränderungseinheit Veränderungen einer Größe eines Fensters vornimmt, in einem Speicher;
Ausführen eines Anwendungsprogramms in Reaktion auf einen Befehl, der aus der Bedienungseinheit eingegeben wird; und
in einem Fall, dass auf dem Bildschirm zwei oder mehr Fenster angezeigt werden und die zwei oder mehr Fenster, die angezeigt werden, nicht ohne Überlappen innerhalb eines Anzeigebereichs des Bildschirms angezeigt werden können, Auslesen der Anzahl der Male aus dem Speicher, wie oft Veränderungen der Größe von Fenstern vorgenommen wurden, die angezeigt werden, und Minimieren eines Fensters, dessen Anzahl der Größenveränderungen die höchste ist, und Anzeigen des minimierten Fensters auf dem Bildschirm.

8. Computerprogrammprodukt zum Steuern der Anzeige von Fenstern von Anwendungsprogrammen nach Anspruch 7, wobei in einem Fall, dass auf dem Bildschirm zwei oder mehr Fenster angezeigt werden, wenn die Ausführung eines Anwendungsprogramms begonnen wird, und die zwei oder mehr Fenster, die angezeigt werden, und das Fenster des auszuführenden Anwendungsprogramms nicht ohne Überlappen innerhalb eines Anzeigebereichs des Bildschirms angezeigt werden können, aus dem Speicher die Anzahl der Male ausgelesen wird, wie oft Veränderungen der Größe von Fenstern vorgenommen wurden, die angezeigt werden, und ein Fenster minimiert wird, dessen Anzahl der Größenveränderungen die höchste ist, und das minimierte Fenster auf dem Bildschirm angezeigt wird.

9. Computerprogrammprodukt zum Steuern der Anzeige von Fenstern von Anwendungsprogrammen nach Anspruch 7, wobei in einem Fall, dass auf dem Bildschirm zwei oder mehr Fenster angezeigt werden, wenn ein Fenster, das auf dem Bildschirm angezeigt wird, in der Größe verändert wird und die zwei oder mehr Fenster, die angezeigt werden, und das Fenster, dessen Größe verändert worden ist, nicht ohne Überlappen innerhalb eines Anzeigebereichs des Bildschirms angezeigt werden können, aus dem Speicher die Anzahl der Male ausgelesen wird, wie oft Veränderungen der Größe von Fenstern vorgenommen wurden, deren Größe nicht verändert wurde, wobei die Fenster auf dem Bildschirm angezeigt werden, und ein Fenster minimiert wird, dessen Anzahl der Größenveränderungen die höchste ist, und das minimierte Fenster auf dem Bildschirm angezeigt wird.

## Revendications

1. Appareil de traitement d'informations comprenant :
une première mémoire (105) qui est adaptée pour stocker au moins un programme d'application ;
une unité d'actionnement (106) destinée à être actionnée par un utilisateur ;
une unité de modification qui est adaptée pour modifier la taille d'une fenêtre d'un programme d'application selon une entrée d'instruction provenant de l'unité d'actionnement, la fenêtre étant affichée sur un écran (107) ; et
une unité d'exécution (102) qui est adaptée pour exécuter des programmes d'application stockés dans la première mémoire en réponse à une entrée d'instruction provenant de l'unité d'actionnement ;
**caractérisé en ce que** l'appareil de traitement d'informations comprend en outre :
une deuxième mémoire (105) qui est adaptée pour stocker le nombre de fois où l'unité de modification effectue des modifications d'une taille d'une fenêtre ; et
une unité de commande d'affichage qui est adaptée pour amener une fenêtre d'un programme d'application exécuté par l'unité d'exécution à être affichée sur l'écran, où, dans un cas où deux fenêtres ou plus sont en cours d'affichage sur l'écran, et les deux fenêtres ou plus étant affichées ne peuvent pas être affichées dans une zone d'affichage de l'écran sans chevauchement, l'unité de commande d'affichage étant adaptée pour lire, à partir de la deuxième mémoire, le nombre de fois où des modifications de la taille de fenêtres affichées sont effectuées, et étant adaptée pour réduire une fenêtre dont le nombre de modifications de taille est le plus grand, et étant adaptée pour afficher la fenêtre réduite sur l'écran.

2. Appareil de traitement d'informations selon la revendication 1, dans lequel, dans un cas où deux fenêtres ou plus sont en cours d'affichage sur l'écran lorsque l'unité d'exécution lance l'exécution d'un programme d'application, et les deux fenêtres ou plus étant affichées et la fenêtre du programme d'application à exécuter ne peuvent pas être affichées dans une zone d'affichage de l'écran sans chevauchement, l'unité de commande d'affichage est adaptée pour lire, à partir de la deuxième mémoire, le nombre de fois où des modifications de la taille de fenêtres affichées sont effectuées, et est adaptée pour réduire une fenêtre dont le nombre de modifications de taille est le plus grand, et est adaptée pour afficher la fenêtre réduite sur l'écran.

3. Appareil de traitement d'informations selon la revendication 2, dans lequel lorsqu'une pluralité de fenêtres ne peuvent pas être affichées sans chevauchement dans la zone d'affichage après la réduction de la fenêtre ayant le plus grand nombre de modifications de taille, l'unité de commande d'affichage est adaptée pour réduire de façon répétée la fenêtre dont le nombre de modifications de taille est le plus grand, où à chaque fois qu'une fenêtre est réduite, l'unité de commande d'affichage est adaptée pour déterminer s'il est possible d'afficher des fenêtres qui ont été réduites, des fenêtres qui n'ont pas été réduites, et une fenêtre d'un programme d'application à exécuter par l'unité d'exécution dans la zone d'affichage sans chevauchement, et, lorsqu'il est déterminé que l'affichage est possible, l'unité de commande d'affichage est adaptée pour afficher les fenêtres qui ont été réduites, les fenêtres qui n'ont pas été réduites, et la fenêtre du programme d'application à exécuter par l'unité d'exécution sur l'écran.

4. Appareil de traitement d'informations selon la revendication 1, dans lequel, dans un cas où deux fenêtres ou plus sont en cours d'affichage sur l'écran lorsque l'unité de modification modifie la taille d'une fenêtre affichée sur l'écran, et les deux fenêtres ou plus étant affichées et la fenêtre dont la taille a été modifiée ne peuvent pas être affichées dans une zone d'affichage de l'écran sans chevauchement, l'unité de commande d'affichage est adaptée pour lire, à partir de la deuxième mémoire, le nombre de modifications de taille de fenêtres dont la taille n'a pas été modifiée, les fenêtres étant affichées dans l'écran, et est adaptée pour réduire une fenêtre dont le nombre de modifications de taille est le plus grand, et est adaptée pour afficher la fenêtre réduite sur l'écran.

5. Appareil de traitement d'informations selon la revendication 4, dans lequel lorsqu'une pluralité de fenêtres ne peuvent pas être affichées sans chevauchement dans la zone d'affichage après la réduction de la fenêtre ayant le plus grand nombre de modifications de taille, l'unité de commande d'affichage est adaptée pour réduire de façon répétée la fenêtre dont le nombre de modifications de taille est le plus grand, où à chaque fois qu'une fenêtre est réduite, l'unité de commande d'affichage est adaptée pour déterminer s'il est possible d'afficher des fenêtres qui ont été réduites, des fenêtres qui n'ont pas été réduites, et une fenêtre dont la taille a été modifiée dans la zone d'affichage sans chevauchement, et, lorsqu'il est déterminé que l'affichage est possible, l'unité de commande d'affichage est adaptée pour afficher les fenêtres qui ont été réduites, les fenêtres qui n'ont pas été réduites , et la fenêtre dont la taille a été modifiée par l'unité de modification sur l'écran.

6. Appareil de traitement d'informations selon la revendication 2 ou 4, dans lequel l'unité de commande d'affichage est adaptée pour afficher chaque fenêtre de sorte qu'une pluralité de fenêtres affichées sur l'écran ne se chevauchent pas.

7. Produit de programme informatique permettant de commander l'affichage de fenêtres de programmes d'application, le programme amenant un ordinateur à exécuter :
une modification d'une taille d'une fenêtre d'un programme d'application selon une entrée d'instruction provenant d'une unité d'actionnement, la fenêtre étant affichée sur un écran ;
**caractérisé par** le fait d'amener l'ordinateur à exécuter :
le stockage du nombre de fois où l'unité de modification effectue des modification d'une taille d'une fenêtre dans une mémoire ;
l'exécution d'un programme d'application en réponse à une entrée d'instruction provenant de l'unité d'actionnement ; et
dans un cas où deux fenêtres ou plus sont en cours d'affichage sur l'écran, et les deux fenêtres ou plus étant affichées ne peuvent pas être affichées dans une zone d'affichage de l'écran sans chevauchement, la lecture, à partir de la mémoire, du nombre de fois où des modifications de la taille de fenêtres affichées sont effectuées, et la réduction d'une fenêtre dont le nombre de modifications de taille est le plus grand, et l'affichage de la fenêtre réduite sur l'écran.

8. Produit de programme informatique permettant de commander l'affichage de fenêtres de programmes d'application selon la revendication 7, comprenant dans un cas où deux fenêtres ou plus sont en cours d'affichage sur l'écran lorsque l'exécution d'un programme d'application est lancée, et les deux fenêtres ou plus étant affichées et la fenêtre du programme d'application à exécuter ne peuvent pas être affichées dans une zone d'affichage de l'écran sans chevauchement, la lecture, à partir de la mémoire, du nombre de fois où des modifications de la taille de fenêtres affichées sont effectuées, et la réduction d'une fenêtre dont le nombre de modifications de taille est le plus grand, et l'affichage de la fenêtre réduite sur l'écran.

9. Produit de programme informatique permettant de commander l'affichage de fenêtres de programmes d'application selon la revendication 7, comprenant dans un cas où deux fenêtres ou plus sont en cours d'affichage sur l'écran lorsque la taille d'une fenêtre affichée sur l'écran est modifiée, et les deux fenêtres ou plus étant affichées et la fenêtre dont la taille a été modifiée ne peuvent pas être affichées dans une zone d'affichage de l'écran sans chevauchement, la lecture, à partir de la mémoire, du nombre de fois où des modifications de la taille de fenêtres dont la taille n'est pas en train d'être modifiée sont effectuées, les fenêtres étant affichées sur l'écran, et la réduction d'une fenêtre dont le nombre de modifications de taille est le plus grand, et l'affichage de la fenêtre réduite sur l'écran.
